# EUROPÄISCHE PATENTANMELDUNG

(11) **EP 0 606 830 A1**
(43) Veröffentlichungstag der Anmeldung: **20.07.1994**
(21) Anmeldenummer: 93890005.7
(22) Anmeldetag: 15.01.1993
(51) Int. Cl.: B29C 67/14

(54) **Verfahren zum Herstellen einer Prepregplatte aus faserverstärktem Kunststoff**

(71) Anmelder: GFM Gesellschaft für Fertigungstechnik und Maschinenbau Aktiengesellschaft, A-4403 Steyr (AT)
(72) Erfinder: Blaimschein, Gottfried, Dipl.-Ing., A-4403 Steyr (AT)
(74) Vertreter: Hübscher, Gerhard, Dipl.-Ing.

(57) **Zusammenfassung**

Zum rationellen Herstellen einer rechteckigen Prepregplatte aus faserverstärktem Kunststoff beliebiger Abmessungen und verschiedener Faserorientierungen werden von einem längsfaserigen Prepregband (P) durch Querschneiden Prepregstücke (S1) mit einer der Plattenlänge entsprechenden Länge oder mit einer der Plattenbreite entsprechenden Länge oder durch Schrägschneiden parallelogrammförmige Prepregstücke (S3) mit einer der Faserlänge der schrägverlaufenden Plattenfasern entsprechenden Länge abgelängt und diese Prepregstücke jeweils parallel zu den Fasern stumpf zu einer der Prepregplatte entsprechenden Prepregeinheit (E1, E2) zusammengeschweißt oder zu einer Prepregbahn (B) zusammengeschweißt und durch ein zu den Bahnrändern normales Querschneiden in der Prepregplatte entsprechende Prepregeinheiten (E3) zerschnitten.

## Beschreibung

Die Erfindung bezieht sich auf ein Verfahren zum Herstellen einer Prepregplatte aus faserverstärktem Kunststoff, mit bezüglich einer rechteckigen Plattenform längs-, quer- oder schrägorientiertem Faserverlauf, sowie auf eine Anlage zum Durchführen dieses Verfahrens.

Die Verarbeitung von Prepregs, das sind mit einem vorbestimmten Anteil unter Wärmezufuhr aushärtender Reaktionsharzmasse imprägnierte Verstärkungsfasern, zu verschiedensten Werkstücken, insbesondere der Luft-, Fahrzeug- und Leichtbauindustrie, hat sich bereits bestens bewährt, wobei als Ausgangsmaterial ein Prepregband mit unidirektionalen, längsgerichteten Verstärkungsfasern dient, aus dem bisher der Werkstückumrißform entsprechende Zuschnitte ausgeschnitten, gegebenenfalls übereinandergeschichtet und in einem Autoklaven zum Werkstück aushärten gelassen werden. Die Werkstückformen sind daher in ihrer Dimension von vornherein durch die Abmessungen des Prepregbandes begrenzt und es ist nicht möglich, Prepregplatten beliebiger Seitenlängen und schon gar nicht Prepregplatten mit verschieden orientiertem Faserverlauf und damit mehrschichtige Laminatplatten vorbestimmter Festigkeitseigenschaften herzustellen, wenn ein händisches Nebeneinanderlegen und Aufeinanderschichten einzelner, von einem Prepregband abgeschnittener Prepregstücke wegen des damit verbundenen Aufwandes und des zu geringen gegenseitigen Zusammenhaltes der einzelnen Stücke unberücksichtigt bleibt.

Der Erfindung liegt daher die Aufgabe zugrunde, diese Mängel zu beseitigen und ein Verfahren zur rationellen Herstellung von Prepregplatten weitgehend beliebiger Dimension anzugeben. Außerdem soll eine zweckmäßige Anlage zum rationellen Durchführen dieses Verfahrens geschaffen werden.

Die Erfindung löst diese Aufgabe dadurch, daß von einem längsfaserigen Prepregband durch Querschneiden Prepregstücke mit einer der Plattenlänge entsprechenden Länge oder Prepregstücke mit einer der Plattenbreite entsprechenden Länge oder durch Schrägschneiden parallelogrammförmige Prepregstücke mit einer der Faserlänge der schrägverlaufenden Plattenfasern entsprechenden Länge abgelängt werden, worauf diese Prepregstücke jeweils parallel zu den Fasern stumpf zu einer der Prepregplatte entsprechenden Prepregeinheit zusammengeschweißt oder zu einer Prepregbahn zusammengeschweißt und durch ein zu den Bahnrändern normales Querschneiden in der Prepregplatte entsprechende Prepregeinheiten zerschnitten werden. Durch dieses Ablängen bestimmter Prepregstücke von einem oder mehreren Prepregbändern, das faserparallele Zusammenschweißen dieser Prepregstücke zu einer entsprechenden Prepregeinheit oder zu einer Prepregbahn, die dann zur gewünschten Prepregeinheit zu zerschneiden ist, können Prepregplatten im wesentlichen beliebiger Dimension vorgefertigt werden, die jeweils längs-, quer- oder schräggerichtete Verstärkungsfasern besitzen, so daß damit auch Prepregplatten unterschiedlichster Größe und mit bestimmten, von der Faserorientierung abhängigen inhomogenen Festigkeitseigenschaften entstehen und sich entsprechend weiterverarbeiten lassen. Das faserparallele Verschweißen gewährleistet eine einwandfreie Verbindung der einzelnen Prepregstücke, ohne durch die Verbindung den Faserverlauf unterbrechen zu müssen, und sorgt für die durchgehende Gleichmäßigkeit des Prepregmaterials einer Prepregeinheit, unabhängig von der Zahl der zusammengeschweißten Prepregstücke.

Werden die Prepregeinheiten als vorgefertigte Laminatlagen mit längsorientiertem Faserverlauf oder mit querorientiertem Faserverlauf oder mit schrägorientiertem Faserverlauf verwendet, wobei bedarfsweise die vorgefertigten Lagen abwechselnd und die Lagen mit schrägorientiertem Faserverlauf außerdem in beiden zueinander symmetrischen Orientierungsmöglichkeiten übereinandergeschichtet, verpreßt und unter Wärmeeinwirkung zu Laminatplatten aushärten gelassen werden, lassen sich mehrschichtige Prepregplatten herstellen, die je nach Wahl der Laminatlagen und deren Faserorientierung Laminatplatten mit insgesamt gleichmäßigen Festigkeitseigenschaften oder aber auch mit bestimmten richtungsabhängigen Unterschieden in den Festigkeitseigenschaften bilden. Es ergeben sich großformatige Laminatplatten, die sich nach der Aushärtung wie Bleche als Ausgangsprodukt zur wirtschaftlichen Fertigung verschiedenster Gegenstände eignen, beispielsweise durch Ausschneiden von Teilen und Formgebung durch Erwärmen und Formpressen bei Thermoplasten, so daß sich diese Laminatplatten auch als organische Bleche bezeichnen lassen.

Um von einem Prepregband einzelne Stücke ablängen zu können, werden Ablängstationen verwendet, die einen Längsförderer für ein Prepregband, eine Schneideinrichtung zum Durchtrennen des Prepregbandes und eine Längenmeßeinrichtung zur Bestimmung der Prepregstücklängen umfassen. Für eine zweckmäßige Anlage zum Durchführen des erfindungsgemäßen Verfahrens sind eine Ablängstation mit einer Schneideinrichtung zum Querschneiden und/oder eine Ablängstation mit einer Schneideinrichtung zum Schrägschneiden vorgesehen, wobei an jede Ablängstation seitlich neben dem Längsförderer eine Schweißstation angeschlosssen ist, die einen zum Ablängschnitt der zugehörigen Ablängstation parallel verlaufenden Querförderer für die abgelängten Prepregstücke und eine sich parallel zum Längsförderer erstreckende Justier- und Schweißeinrichtung zum Stumpfschweißen der Prepregstücke sowie einen den Querförderern nach der Schweißeinrichtung fortsetzenden Abnahmeförderer und vorzugsweise Aufnahmen zum Ablegen der entstehenden Prepregeinheiten aufweist, und wobei zumindest dem Abnahmeförderer der der schrägschneidenen Ablängstation nachgeordneten Schweißstation eine mit einer Längenmeßeinrichtung verbundene Schneideinrichtung zum Querschneiden der zusammengeschweißten Prepregbahn zugeordnet ist. Eine solche Anlage erlaubt es, die auf der einen Ablängstation mit dem Querschneiden abgelängten Prepregstücke zu Prepregeinheiten zusammenzuschweißen, die entweder eine Prepregplatte mit längsorientiertem Faserverlauf oder eine Prepregplatte mit querorientiertem Faserverlauf ergeben, und die von einer Ablängstation mit dem Schrägschnitt entstehenden Prepregschnitte zuerst zu einer Prepregbahn zusammenzuschweißen, von der dann Prepregeinheiten abgeschnitten werden können, die Prepregplatten mit schrägorientiertem Faerverlauf entstehen lassen. Selbstverständlich wäre es auch möglich, für jede der erforderlichen Platten, also für die Prepregeinheiten mit längsorientiertem Faserverlauf, für die Prepregeinheiten mit querorientiertem Faerverlauf, für die Prepregeinheiten mit nach der einen Richtung schrägem Faserverlauf und für die Prepregeinheiten mit nach der anderen Richtung schrägem Faserverlauf jeweils eigene Abläng- und Schweißstationen vorzusehen, was aber einen an sich unnötigen Mehraufwand mit sich brächte. Durch die Ablängstation mit Querschnitt und die ihr zugeordnete Schweißstation können ja je nach Längenwahl der abgelängten Prepregstücke und der Zahl der aneinandergeschweißten Stücke die verschiedenen Prepregeinheiten vorbereitet werden und genauso können die auf einer Ablängstation mit Schrägschnitt hergestellten Prepregeinheiten durch ein Wenden oder Drehen um 180° eine Prepregplatte mit links- oder rechtsorientiertem Faserschrägverlauf vorgefertigt werden.

Um die gesamte Anlage platzsparend unterbringen zu können, sind die beiden Abläng- und Schweißstationen mit parallel gerichteten Quer- und Abnahmeförderern nebeneinander angeordnet oder sind die beiden Abläng- und Schweißstationen mit aufeinander zugerichteten Quer- und Abnahmeförderern beidseitig zu den Aufnahmen für die Prepregeinheiten angeordnet, wodurch die Aufnahmen etwa mittig zwischen den beiden Stationsgruppen liegen, sich Preßformen für einen anschließenden Druck- und Erhitzungsvorgang im Nahbereich dieser Aufnahmen aufstellen lassen, ein Manipulator zum Transportieren der vorbereiteten Prepregeinheiten von den Aufnahmen in die Preßformen oder zu anderen Weiterverarbeitungsstationen günstig einsetzbar ist und die Anlage auch von einem zentralen Kommandopult aus gut überschaubar und kontrollierbar bleibt.

Ist nach einem anderen Ausführungsbeispiel der Erfindung an die Ablängstation seitlich neben dem Längsförderer eine Schweißstation angeschlossen, die einen Querförderer für die abgelängten Prepregstücke, eine Justier- und Schweißeinrichtung zum Stumpfschweißen der Prepregstücke und einen den Querförderer nach der Schweißeinrichtung fortsetzenden Abnahmeförderer und vorzugsweise Aufnahmen zum Ablegen der entstehenden Prepregein- heiten aufweist, wobei der Längsförderer der Ablängstation von einer Normallage in eine Schräglage zur Schneideinrichtung verschwenkbar ist und die Schweißstation eine zur jeweiligen Längsfördererlage parallel ausrichtbare Justier- und Schweißeinrichtung besitzt, der ein den Schwenkbereich des Längsförderers miterfassender Querförderer vorgeordnet und eine mit einer Längenmeßeinrichtung verbundene Schneideinrichtung zum Querschneiden der zusammengeschweißten Prepregbahn nachgeordnet ist, können die Abläng- und Schweißstationen für das Quer- und Schrägschneiden miteinander kombiniert werden, da je nach Schwenklage des Längsförderers und der Justier- und Schweißeinrichtung quer- oder schräggeschnittene Prepregstücke verschweißbar sind und Prepregeinheiten längs-, quer- oder schrägorientierter Faserrichtung entstehen.

In der Zeichnung ist der Erfindungsgegenstand beispielsweise veranschaulicht, und zwar zeigen
- Fig. 1: eine nach dem erfingungsgemäßen Verfahren herstellbare Laminatplatte in teilgeschnittener Draufsicht und
- Fig. 2 und 3: verschiedene Ausführungsbeispiele einer erfindungsgemäßen Anlage zum Durchführen des Verfahrens jeweils in einem Anlagenschema.

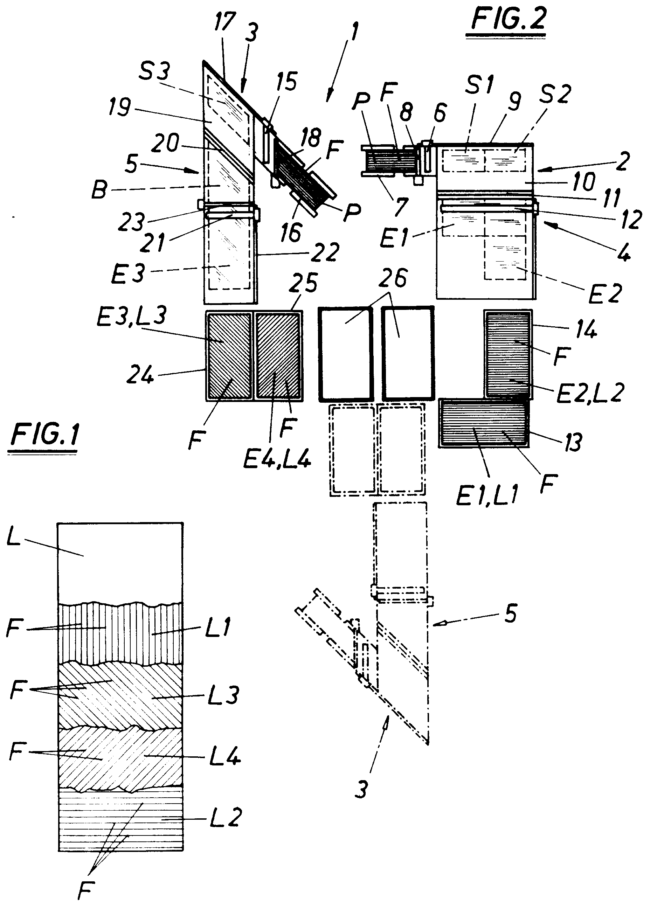

Eine Laminatplatte L mit rechteckigem Grundriß setzt sich, wie in Fig. 1 angedeutet, aus mehreren übereinandergeschichteten Lagen von Prepregeinheiten zusammen, wobei Lagen L1 mit längsorientierten Fasern F, Lagen L2 mit querorientierten Fasern F und Lagen L3 und L4 mit unter 45grädigem Winkel nach beiden Seiten schrägorientierten Fasern F vorgesehen sind. Um homogene Festigkeitseigenschaften zu erreichen, sind jeweils gleich viele Lagen L1 - L4 gleichmäßig verteilt übereinandergelegt, es können aber auch, um eine bestimmte, richtungsabhängige Inhomogenität zu erreichen, Lagen L1 - L4 in unterschiedlicher Anzahl und ungleichmäßiger Verteilung vorhanden sein und auch der Winkel für den Schrägverlauf der Fasern F in den Lagen L3 und L4 kann aus diesem Grund von 45° abweichen. Je nach Wahl, Anzahl und Verteilung der Laminatlagen L1 - L4 entsteht daher eine mehrschichtige Laminatplatte L mit vorbestimmbaren Festigkeitseigenschaften, die sich in Art eines organischen Bleches auf verschiedene Art und Weise weiterverarbeiten läßt.

Zur rationellen Herstellung solcher Laminatplatten L gibt es gemäß dem Ausführungsbeispiel nach Fig. 2 eine Anlage 1, die zwei Ablängstationen 2, 3 und zwei diesen Ablängstationen nachgeordnete Schweißstationen 4, 5 aufweist. Die Ablängstation 2 umfaßt dabei einen Längsförderer 6 für den Längsvorschub eines von einer Vorratsrolle 7 abziehbaren Prepregbandes P mit längsverlaufenden Verstärkungsfasern F, eine Schneideinrichtung 8 zum Querschneiden des Prepregbandes P sowie eine Längenmeßeinrichtung 9 zum Bestimmen der Länge für die jeweils abzulängenden Prepregstücke.

Die seitlich neben dem Längsförderer 6 an die Ablängstation 2 angeschlossene Schweißstation 4 besteht aus einem zum Ablängschnitt parallel wirkenden Querförderer 10, einer sich parallel zum Längsförderer 6 erstreckenden Justier- und Schneideinrichtung 11 und einem den Querförderer 10 nach der Schneideinrichtung 11 fortsetzenden Abnahmeförderer 12, wobei der Querförderer 10 die in der Ablängstation 2 vom Prepregband P abgelängten Prepregstücke S1, S2 quer zu ihrer Längserstreckung der Justier- und Schweißeinrichtung 11 zuführt, wo sie ausgerichtet und längsseitig Stück für Stück stumpf zusammengeschweißt werden, bis eine Prepregeinheit E1, E2 gewünschten Ausmaßes vorliegt. Der Abnahmeförderer 12 sorgt für den Weitertransport der zusammengeschweißten Prepregstücke und legt dann die entstandenen Prepregeinheiten in entsprechende Aufnahmen 13, 14 für die zugehörigen Prepregeinheiten E1, E2 ab.

Die Ablängstation 3 und die ihr nachgeordnete Schweißstation 5 sind ähnlich wie die Ablängstation 2 und die Schweißstation 4 aufgebaut. Auch hier umfaßt die Ablangstation 3 einen Längsförderer 15 für den Längsabzug eines auf einer Vorratstrommel 16 aufgewickelten Prepregbandes P mit längsgerichteten Verstärkungsfasern F und eine Längenmeßeinrichtung 17 zur Bestimmung der Länge für die jeweils abzulängenden Prepregstücke S3, doch ist eine Schneideinrichtung 18 zum Schrägschneiden unter 45° zur Prepregbandlängsrichtung vorgesehen, so daß vom Prepregband P entsprechend lange parallelogrammartige Prepregstücke S3 abgelängt werden.

Die Schweißstation 5 besteht aus einem zum Schrägschnitt parallel wirkenden Querförderer 19, einer sich parallel zur Längsrichtung des Prepregbandes P erstreckenden Justier- und Schweißeinrichtung 20 sowie einem den Querförderer 19 nach der Schweißeinrichtung 20 fortsetzenden Abnahmeförderer 21, dem aber eine mit einer Längenmeßeinrichtung 22 verbundene Schneideinrichtung 23 zum Querschneiden zugeordnet ist. Die in der Ablängstation 3 abgelängten parallelogrammartigen Prepregstücke S3 werden über den Querförderer 19 wieder der Justier- und Schweißeinrichtung 20 zugeführt, wo sie aufeinander ausgerichtet und gegenseitig zu einer Prepregbahn B zusammengeschweißt werden, welche Prepregbahn B vom Abnahmeförderer 21 dem Schweißvorgang entsprechend, Stück für Stück weiterbewegt wird, bis nach einer bestimmten Länge über die Schneideinrichtung 23 eine Prepregeinheit E3 normal zur Bahnlängsrichtung abgelängt und in eine geeignete Aufnahme 24 abgelegt wird.

Zum Herstellen einer Laminatplatte L werden nun auf der Ablängstation 2 von einem Prepregband P Prepregstücke S1 abgelängt, die in ihrer Länge der Plattenlänge entsprechen. Diese Stücke S1 werden dann anschließend in der Schweißstation 4 mit Hilfe des Querförderers 10, der Justier- und Schweißeinrichtung 11 und des Abnahmeförderers 12 längsseitig so lange stumpf aneinandergeschweißt, bis jeweils Prepregeinheiten E1 mit einer der Plattenbreite entsprechenden Breite entstehen. Die so nacheinander hergestellten Prepregeinheiten werden in der Aufnahme 13 als vorgefertigte Laminatlagen L1 mit längsorientierten Fasern F abgelegt.

Auf der Ablängstation 2 lassen sich aber auch Prepregstücke S2 ablängen, deren Länge der Laminatbreite entspricht, welche kürzeren Prepregstücke S2 dann in der Schweißstation 4 wiederum stumpf aneinandergeschweißt werden, bis eine Prepregeinheit E2 mit einer der Plattenlänge entsprechenden Länge entsteht. Diese Prepregeinheiten E2 werden in der Aufnahme 14 abgelegt und bilden vorbereitete Laminatlagen L2 mit querorientierten Fasern F.

Auf der Ablängstation 3 werden im Gegensatz zur Ablängstation 2 von einem Prepregband P durch die schräggerichtete Schneideinrichtung 18 parallelogrammförmige Prepregstücke S3 abgelängt, deren Länge der Faserlänge in den Laminatelagen L3 und L4 entspricht. Diese Prepregstücke S3 werden dann wiederum in der anschließenden Schweißstation 5 mit Hilfe des Querförderers 19 und der Justier- und Schweißeinrichtung 20 zu einer Prepregbahn B stumpf zusammengeschweißt, deren Breite wieder der Plattenbreite entspricht. Von dieser Prepregbahn B können dann über die Schneideinrichtung 23 unter Mitwirkung des Abnahmeförderers 21 und der Längenmeßeinrichtung 22 Prepregeinheiten E3 mit einer der Plattenlänge entsprechenden Länge abgelängt werden, welche Prepregeinheiten E3 daher in einer Aufnahme 24 als Laminatlagen L3 mit nach der einen Seite schräg verlaufenden Fasern F abgelegt werden. Durch eine nicht weiter dargestellte Dreh- oder Wendeeinrichtung lassen sich diese Prepregeinheiten E3 um 180° drehen oder wenden und in einer Aufnahme 25 ablegen, so daß hier Prepregeinheiten E4 mit nach der anderen Seite schräg verlaufenden Fasern F als Laminatlagen L4 vorrätig sind.

Diese vorbereiteten Laminatlagen sind nun einfach durch einen nicht weiter dargestellten Manipulator in geeignete Preßformen 26 in der gewünschten Reihenfolge und Anzahl einzulegen und dann durch Aushärten zum gewünschten Laminat fertigzustellen.

Wie in Fig. 2 angedeutet, lassen sich jeweils die Abläng- und Schweißstationen 2, 4 bzw. 3, 5 parallel nebeneinander, aber auch, wie strichpunktiert angedeutet, gegengleich anordnen, um die gesamte Anlage auf möglichst engem Raum unterbringen und gut überwachen und kontrollieren zu können.

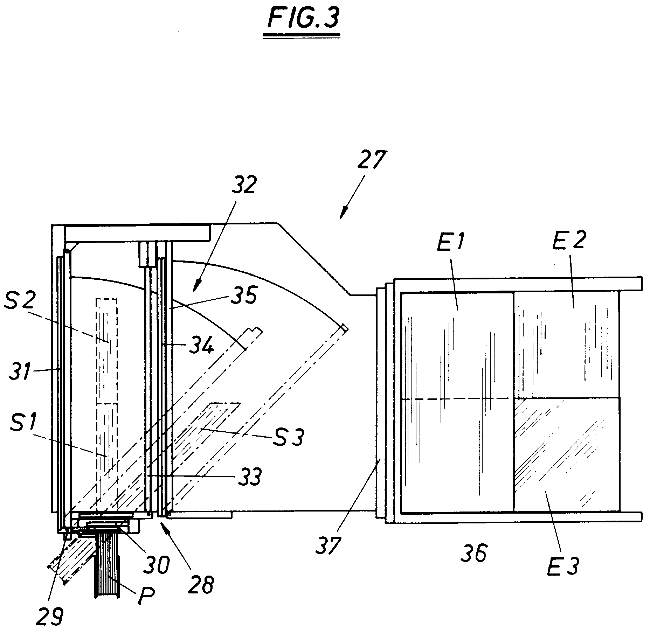

Gemäß dem Ausführungsbeispiel nach Fig. 3 ist eine besonders vorteilhafte Anlage 27 zum Herstellen von Laminatplatten L vorgesehen, bei der nur eine einzige Ablängstation 28 mit einem Längsförderer 29 für ein Prepregband P, einer Schneideinrichtung 30 zum Durchtrennen des Prepregbandes und einer Längenmeßeinrichtung 31 zur Bestimmung der Prepregstücklängen vorgesehen ist. An diese Ablängstation 28 schließt seitlich neben dem Längsförderer 29 eine Schweißstation 32 an, die einen Querförderer 33 für die abgelängten Prepregstücke S1, S2, S3, eine Justier- und Schweißeinrichtung 34 zum Stumpfschweißen der Prepregstücke und einen den Querförderer 33 nach der Schweißeinrichtung 34 fortsetzenden Abnahmeförderer 35 aufweist, wobei an den Abnahmeförderer Aufnahmen 36 zum Ablegen der entstehenden Prepregeinheiten nachgeordnet sind. Der Längsförderer 29 der Ablängstation 28 ist nun von einer Normallage in eine Schräglage zur Schneideinrichtung 30 (strichpunktierte Darstellung) verschwenkbar und die Justier- und Schweißeinrichtung 34 ist jeweils in eine Parallellage zur jeweiligen Längsfördererlage ausrichtbar und außerdem läßt sich auch der der Justier- und Schweißeinrichtung 34 vorgeordnete Querförderer 33 mitschwenken, um unabhängig von der Schräglage des Längsförderers die abgelängten Prepregstücke von der Ablängstation 28 der Schweißstation 32 ordnungsgemäß übergeben zu können. Im Endbereich des Abnahmeförderers 35 sitzt eine mit einer nicht weiter dargestellten Längenmeßeinrichtung verbundene Schneideinrichtung 37, mit deren Hilfe die aus den einzelnen Prepregstücken zuammengeschweißte Prepregbahn in die gewünschten Prepregeinheiten E1 - E4 abgelängt werden kann, welche Prepregeinheiten dann in die Aufnahmen 36 abgelegt werden.

Diese Anlage 27 erlaubt aufgrund der schwenkbaren Lagerung der Ablängstation 28 bzw. der Justier- und Schweißeinrichtung 34 der Schweißstation 32 je nach Schwenklage die Herstellung von Prepregeinheiten mit längs-, quer- oder schrägorientiertem Faserverlauf, wobei der Winkel der schrägorientierten Fasern beliebig wählbar ist, so daß eine besonders kompakte, platzsparende und überaus rationell einsetzbare Anlage entsteht.

## Patentansprüche

1. Verfahren zum Herstellen einer Prepregplatte aus faserverstärktem Kunststoff mit bezüglich einer rechteckigen Plattenform längs-, quer- oder schrägorientiertem Faserverlauf, dadurch gekennzeichnet, daß von einem längsfaserigen Prepregband (P) durch Querschneiden Prepregstücke (S1) mit einer der Plattenlänge entsprechenden Länge oder Prepregstücke (S2) mit einer der Plattenbreite entsprechenden Länge oder durch Schrägschneiden parallelogrammförmige Prepregstücke (S3) mit einer der Faserlänge der schrägverlaufenden Plattenfasern entsprechenden Länge abgelängt werden, worauf diese Prepregstücke (S1, S2, S3) jeweils parallel zu den Fasern (F) stumpf zu einer der Prepregplatte entsprechenden Prepregeinheit (E1, E2) zusammengeschweißt oder zu einer Prepregbahn (B) zusammengeschweißt und durch ein zu den Bahnrändern normales Querschneiden in der Prepregplatte entsprechende Prepregeinheiten (E3) zerschnitten werden.

2. Verfahren nach Anspruch 1, dadurch gekennzeichnet, daß die Prepregeinheiten (E1, E2, E3) als vorgefertigte Laminatlagen mit längsorientiertem Faserverlauf (L1) oder mit querorientiertem Faserverlauf (L2) oder mit schrägorientiertem Faserverlauf (L3) verwendet werden, wobei bedarfsweise die vorgefertigten Lagen (L1, L2, L3) abwechselnd und die Lagen (L3) mit schrägorientiertem Faserverlauf außerdem in beiden zueinander symmetrischen Orientierungsmöglichkeiten (L3, L4) übereinandergeschichtet, verpreßt und unter Wärmeeinwirkung zu Laminatplatten (L) aushärten gelassen werden.

3. Anlage (1) zum Durchführen des Verfahrens nach Anspruch 1 oder 2, mit einer einen Längsförderer (6, 15) für ein Prepregband (P), eine Schneideinrichtung (8, 18) zum Durchtrennen des Prepregbandes (P) und eine Längenmeßeinrichtung (9, 17) zur Bestimmung der Prepregstücklängen umfassenden Ablängstation (2, 3), dadurch gekennzeichnet, daß eine Ablängstation (2) mit einer Schneideinrichtung (8) zum Querschneiden und/oder eine Ablängstation (3) mit einer Schneideinrichtung (18) zum Schrägschneiden vorgesehen sind, daß an jede Ablängstation (2, 3) seitlich neben dem Längsförderer (6, 15) eine Schweißstation (4, 5) angeschlossen ist, die einen zum Ablängschnitt der zugehörigen Ablängstation (2, 3) parallelverlaufenden Querförderer (10, 19) für die abgelängten Prepregstücke (S1, S2; S3) und eine sich parallel zum Längsförderer (6, 15) erstreckende Justier- und Schweißeinrichtung (11, 20) zum Stumpfschweißen der Prepregstücke sowie einen den Querförderer (10, 19) nach der Schweißeinrichtung (11, 20) fortsetzenden Abnahmeförderer (12, 21) und vorzugsweise Aufnahmen (13, 14, 24, 25) zum Ablegen der entstehenden Prepregeinheiten (E1 - E4) aufweist, wobei zumindest dem Abnahmeförderer (21) der der schrägschneidenden Ablängstation (3) nachgeordneten Schweißstation (5) eine mit einer Längenmeßeinrichtung (22) verbundene Schneideinrichtung (23) zum Querschneiden der zusammengeschweißten Prepregbahn (B) zugeordnet ist.

4. Anlage nach Anspruch 3, dadurch gekennzeichnet, daß die beiden Abläng- und Schweißstationen (2, 4; 3, 5) mit parallelgerichteten Quer- und Abnahmeförderern (10, 12; 19, 21) nebeneinander angeordnet sind.

5. Anlage nach Anspruch 3, dadurch gekennzeichnet, daß die beiden Abläng- und Schweißstationen (2, 4; 3, 5) mit aufeinander zugerichteten Quer- und Abnahmeförderern (10, 12; 19, 21) beidseitig zu den Aufnahmen (13, 14, 24, 25) für die Prepregeinheiten (E1 - E4) angeordnet sind.

6. Anlage (27) zum Durchführen des Verfahrens nach Anspruch 1 oder 2, mit einer einen Längsförderer (29) für ein Prepregband (P), eine Schneideinrichtung (30) zum Durchtrennen des Prepregbandes (P) und eine Längenmeßeinrichtung (31) zur Bestimmung der Prepregstücklängen umfassenden Ablängstation (28), dadurch gekennzeichnet, daß an die Ablängstation (28) seitlich neben dem Längsförderer (29) eine Schweißstation (32) angeschlossen ist, die einen Querförderer (33) für die abgelängten Prepregstücke (S1, S2, S3), eine Justier- und Schweißeinrichtung (34) zum Stumpfschweißen der Prepregstücke und einen den Querförderer (33) nach der Schweißeinrichtung (34) fortsetzenden Abnahmeförderer (35) und vorzugsweise Aufnahmen (36, 37) zum Ablegen der entstehenden Prepregeinheiten (E1 - E4) aufweist, wobei der Längsförderer (29) der Ablängstation (28) von einer Normallage in eine Schräglage zur Schneideinrichtung (30) verschwenkbar ist und die Schweißstation (32) eine zur jeweiligen Längsfördererlage parallel ausrichtbare Justier- und Schweißeinrichtung (34) besitzt, der ein den Schwenkbereich des Längsförderers (29) miterfassender Querförderer (33) vorgeordnet und eine mit einer Längenmeßeinrichtung verbundene Schneideinrichtung (36) zum Querschneiden der zusammengeschweißten Prepregbahn (B) nachgeordnet ist.
